(19) Europäisches Patentamt
European Patent Office
Office européen des brevets

(11) Veröffentlichungsnummer: **0 093 935**
**B1**

# (12) EUROPÄISCHE PATENTSCHRIFT

(45) Veröffentlichungstag der Patentschrift: **21.08.85**

(51) Int. Cl.⁴: **C 09 B 67/22**, C 09 B 29/085, C 09 B 43/42, D 06 P 1/18

(21) Anmeldenummer: **83104024.1**

(22) Anmeldetag: **25.04.83**

(54) **Farbstoffmischungen.**

(30) Priorität: **05.05.82 DE 3216788**

(43) Veröffentlichungstag der Anmeldung: **16.11.83 Patentblatt 83/46**

(45) Bekanntmachung des Hinweises auf die Patenterteilung: **21.08.85 Patentblatt 85/34**

(84) Benannte Vertragsstaaten: **CH DE FR GB LI**

(56) Entgegenhaltungen:
**EP - A - 0 036 512**
**CH - A - 487 227**
**FR - A - 2 193 062**

**CHEMICAL ABSTRACTS, Band 98, Nr. 12, März 1983, Seite 76, Nr. 91010r, Columbus, Ohio, USA**

(73) Patentinhaber: **BAYER AG, Konzernverwaltung RP Patentabteilung, D-5090 Leverkusen 1 Bayerwerk (DE)**

(72) Erfinder: **Leverenz, Klaus, Dr., Heymannstrasse 44, D-5090 Leverkusen 1 (DE)**
Erfinder: **Otten, Hans-Günter, Dr., *Kurt-Schumacher-Ring 91a, D-5090 Leverkusen 1 (DE)***

**EP 0 093 935 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Gegenstand der Erfindung sind Mischungen aus mindestens zwei verschiedenen Farbstoffen der Formel

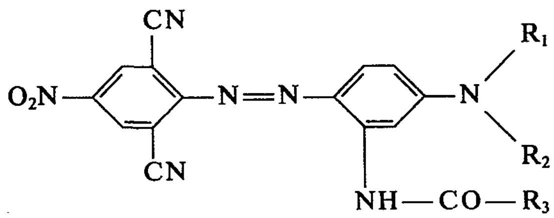

(I)

in welcher

$R_1$ und $R_2$ Ethyl oder n-Propyl und
$R_3$ Methyl, Ethyl oder n-Propyl bedeuten,

mit der Maßgabe, daß mindestens eine Farbstoffkomponente der angegebenen Formel, worin $R_3$ für n-Propyl steht, enthalten ist.

Der Gewichtsanteil der Komponente mit $R_3$ = n-Propyl liegt zwischen 30 und 80%.

Bevorzugte Mischungen sind solche, die aus zwei Komponenten der Formel (I) bestehen, worin $R_1$ und $R_2$ Ethyl bedeuten, mit der Maßgabe, daß in einer Komponente $R_3$ für Methyl und in der anderen $R_3$ für n-Propyl stehen.

Vorzugsweise liegt der Gewichtsanteil der Komponente mit $R_3$=n-Propyl in allen Mischungen zwischen 50 und 90%. Ganz besonders bevorzugt ist ein Mindestanteil dieser Komponente von 70—90%.

Die neuen Farbstoffmischungen können nach verschiedenen Verfahren hergestellt werden:

1. durch Abmischen der separat hergestellten und formierten Einzelfarbstoffkomponenten,
2. durch gemeinsame Formierung der separat hergestellten Einzelkomponenten,
3. durch gemeinsame »Cyanierung« der getrennt hergestellten 2,6-Dibromfarbstoffe und anschließende Formierung und
   — vorzugsweise —
4. durch
   a) Simultankupplung von diazotiertem 2,6-Dibrom-4-nitroanilin auf Mischungen von Anilinen der Formel

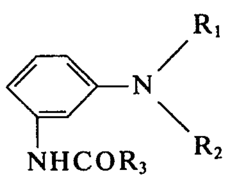

   die der obengenannten Maßgabeformulierung entsprechen,
   b) gemeinsame »Cyanierung« der dabei erhaltenen Dibromfarbstoffe und
   c) gemeinsame Formierung.

Die »Cyanierung« von ortho-Halogenazofarbstoffen sowie die dabei erhaltenen Dicyanfarbstoffe — als solche — sind allgemein bekannt (vgl. DE-PS 1 544 563 = US-PS 3 962 209 sowie DE-OS 3 009 635).

Auch die Formierung erfolgt nach an sich bekannten Verfahren.

Die neuen Farbstoffmischungen eignen sich zum Färben von Polyester- und Celluloseesterfasern und zeichnen sich dabei durch eine deutlich geringere Temperaturabhängigkeit des Ziehvermögens im Bereich zwischen 100 und 130°C aus, insbesondere bei der Herstellung tiefer Farbtöne und der Anwendung kurzer Färbezeiten. In dieser Hinsicht sind sie nicht nur den Einzelkomponenten sondern auch nächstvergleichbaren bekannten Mischungen (vgl. DE-OS 2 234 465) überlegen.

Man kann daher mit den anspruchsgemäßen Mischungen Textilien aus aromatischen Polyestern oder Mischtextilien aus aromatischen Polyestern und Cellulose oder aus aromatischen Polyestern und Wolle besonders wirtschaftlich und energiesparend färben, weil die Färbetemperaturen entweder erniedrigt werden können oder weniger lange aufrecht erhalten werden müssen, um eine optimale Farbstoffausbeute zu erzielen. Die überlegene Wirtschaftlichkeit zeigt sich insbesondere bei der Erstellung hoher Farbtiefen, bei denen die anteiligen Farbstoffkosten am Färbeprozeß besonders groß sind.

Darüber hinaus bieten die erfindungsgemäßen Farbstoffmischungen besondere Vorteile beim Fär ben von Mischtextilien aus aromatischen Polyestern und Naturfasern, insbesondere bei Polyester-Woll-Mischungen. Gegenüber bekannten Einzelfarbstoffen und Mischungen dieses Farbstofftyps ergeben sie höhere Farbausbeuten und Vorteile im Anschmutzen des Wollanteils. Der Vorteil ist besonders stark ausgeprägt, wenn tiefe Färbungen, etwa in doppelter Richttyptiefe, hergestellt werden sollen.

In den nachfolgenden Beispielen bedeuten Teile »Gewichtsteile«.

Beispiel 1

Eine Mischung aus 5 Teilen des Farbstoffs der Formel A, 10 Teilen des Farbstoffs der Formel B und 35 Teilen des Farbstoffs der Formel C werden in Wasser angerührt und in Gegenwart von 50 Teilen eines handelsüblichen Ligninsulfonates in einer Perlmühle fein dispergiert und anschließend sprühgetrocknet.

In einem Färbebad, das 5 g/l eines handelsüblichen Carriers enthält, mit Natriumphosphat und Essigsäure auf einen pH-Wert von 4,5 gestellt ist, werden 100 Teile eines Mischgewebes aus 55% Polyethylenterephthalat und 45% Wolle mit 0,5 Teilen der oben beschriebenen Farbstoffpräparation 30 Minuten bei 105° C gefärbt.

Der Polyesterteil des Gewebes wird in einem vollen blauen Farbton gefärbt, während der Wollteil nur leicht angefärbt wird. Das gefärbte Material besitzt gute Licht- und Naßechtheiten.

Beispiel 2

Eine Mischung aus 10 Teilen des Farbstoffs A und 40 Teilen des Farbstoffs C werden in Gegenwart von 50 Teilen Ligninsulfonat in eine wäßrige Farbstoffdispersion überführt, die anschließend sprühgetrocknet wird.

Mit 0,5 Teilen des erhaltenen Pulvers werden 100 Teile eines Mischgewebes aus Polyester und Wolle wie in Beispiel 1 beschrieben gefärbt.

Der Polyesteranteil des Gewebes ist wiederum in einem vollen blauen Ton gefärbt, während der Wollteil nur schwach angefärbt ist. Das Material besitzt gute Licht- und Naßechtheiten.

Zu ähnlichen guten Ergebnissen kommt man bei Verwendung nachstehender Mischungen:

Beispiel 3

5 Teile A + 10 Teile B + 25 Teile C + 10 Teile D.

Beispiel 4

80 Teile C + 20 Teile E.

Beispiel 5

25 Teile C + 15 Teile E + 10 Teile F.

Die vorstehend genannten Farbstoffkomponenten haben folgende Bedeutungen:

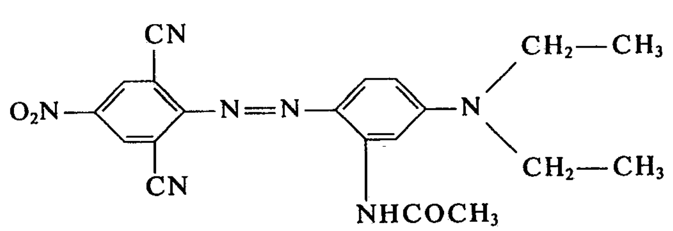

(A)

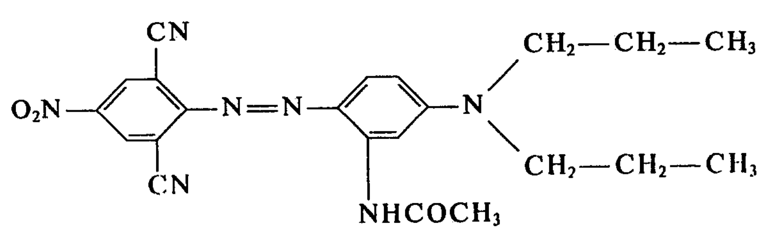

(B)

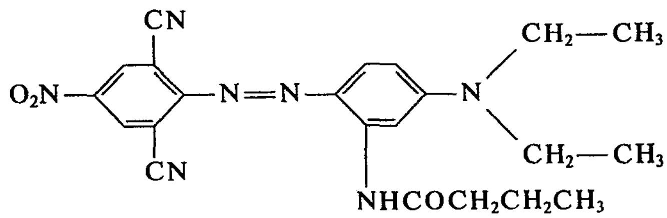

(C)

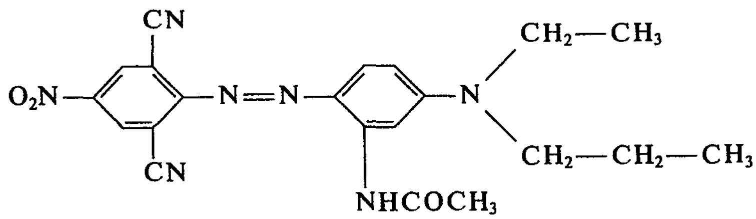

(D)

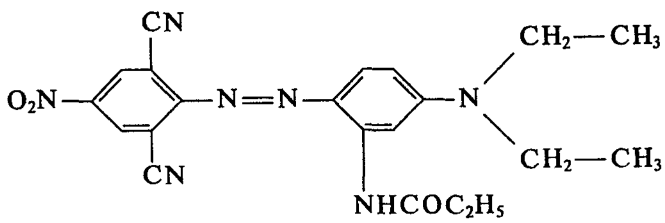

(E)

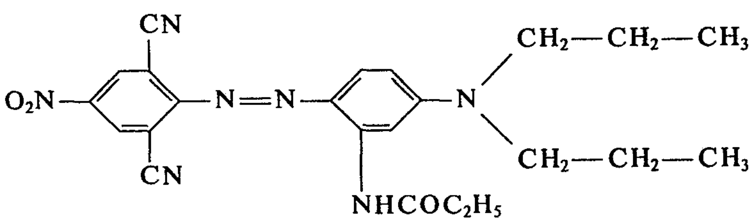

(F)

Beispiel 6

Mit 1 Teil des in Beispiel 2 genannten Farbstoffpulvers werden 100 Teile eines Gewebes aus reinem Polyethylenterephtalat 30 Minuten bei 110° C gefärbt: Man erhält eine volle blaue Färbung mit guter Naß- und Lichtechtheit.

Beispiel 7

Mit 0,6 Teilen der in Beispiel 4 beschriebenen Farbstoffmischung werden 100 Teile eines Mischgewebes aus 65% Polyethylenterephtalat und 35% Baumwolle 30 Minuten bei 110° C gefärbt. Der Polyesteranteil ist dadurch in einem vollen blauen Ton gefärbt, während die Baumwolle nur wenig ausgeschmutzt ist. Die Licht- und Naßechtheiten sind gut.

**Patentansprüche**

1. Mischungen aus mindestens zwei verschiedenen Farbstoffen der Formel

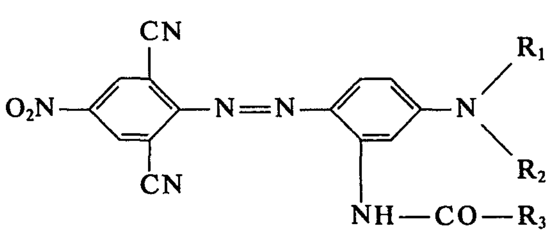

(I)

in welcher

$R_1$ und $R_2$ Ethyl oder n-Propyl bedeuten,

$R_3$ Methyl, Ethyl oder n-Propyl bedeuten,

mit der Maßgabe, daß mindestens eine Farbstoffkomponente der angegebenen Formel, worin $R_3$ für n-Propyl steht, enthalten ist.

2. Mischungen gemäß Anspruch 1, dadurch gekennzeichnet, daß sie aus den beiden Farbstoffen der Formeln

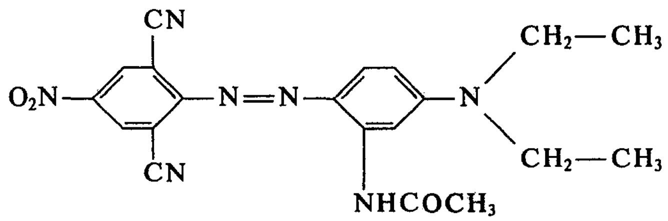

(A)

und

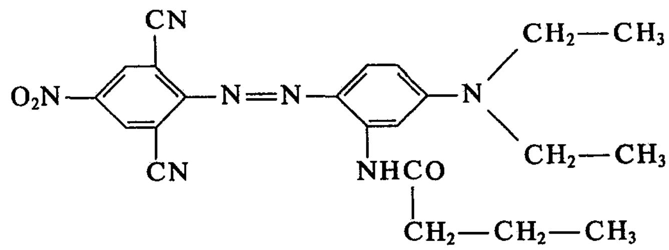

(B)

bestehen.

3. Mischungen gemäß Anspruch 1 oder 2, dadurch gekennzeichnet, daß der Gewichtsanteil des Farbstoffs der angegebenen Formel, worin $R_1/R_2$ = Ethyl und $R_3$ = n-Propyl bedeuten, 30—80% beträgt.

4. Mischungen gemäß Anspruch 1 oder 2, dadurch gekennzeichnet, daß der Gewichtsanteil des Farbstoffs der angegebenen Formel, worin $R_1/R_2$ = Ethyl und $R_3$ = n-Propyl bedeuten, 50—90% beträgt.

5. Mischungen gemäß Anspruch 1 oder 2, dadurch gekennzeichnet, daß der Gewichtsanteil des Farbstoffs der angegebenen Formel, worin $R_1/R_2$ = Ethyl und $R_3$ = n-Propyl bedeuten, 70—90% beträgt.

6. Verwendung der Mischungen gemäß Ansprüchen 1 bis 5 zum Färben von Polyester- oder Celluloseesterfasern oder Gemischen dieser Fasern mit Wolle und/oder Cellulosefasern.

**Claims**

1. Mixtures of at least two different dyestuffs of the formula

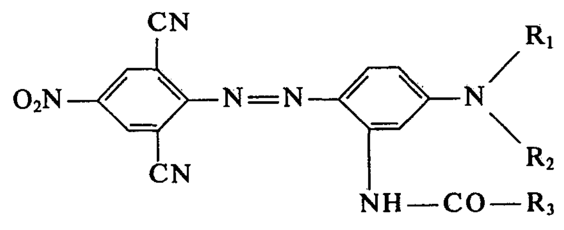

(I)

in which

$R_1$ and $R_2$ denote ethyl or n-propyl, and
$R_3$ denotes methyl, ethyl or n-propyl,

with the proviso that the mixtures contain at least one dyestuff component of the formula indicated and wherein $R_3$ represents n-propyl.

2. Mixtures according to Claim 1, characterised in that they consist of the two dyestuffs of the formulae

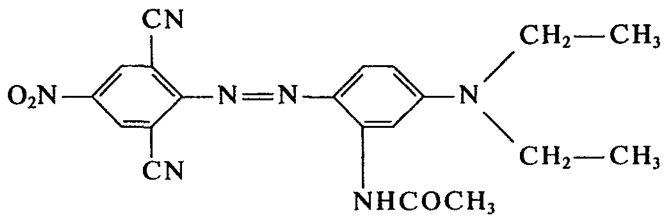

(A)

and

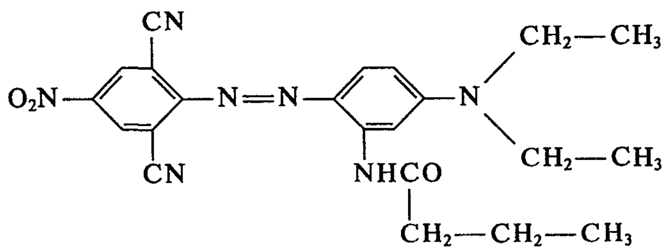

(B)

3. Mixtures according to Claim 1 or 2, characterised in that the weight proportion of the dyestuff of the formula indicated and wherein $R_1/R_2$ = ethyl and $R_3$ = n-propyl is 30—80%.

4. Mixtures according to Claim 1 or 2, characterised in that the weight proportion of the dyestuff of the formula indicated and wherein $R_1/R_2$ = ethyl and $R_3$ = n-propyl is 50—90%.

5. Mixtures according to Claim 1 or 2, characerised in that the weight proportion of the dyestuff of the formula indicated and wherein $R_1/R_2$ = ethyl and $R_3$ = n-propyl is 70—90%.

6. Use of mixtures according to Claims 1 to 5, for dyeing polyester or cellulose ester fibres or mixtures of these fibres with wool and/or cellulose fibres.

**Revendications**

1. Mélanges d'au moins deux colorants différents de formule

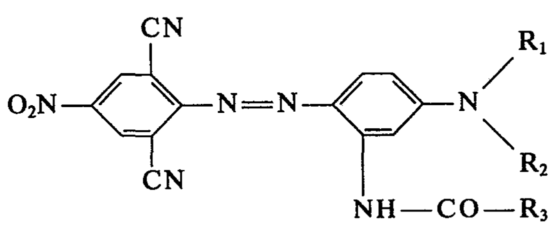

(I)

dans laquelle

$R_1$ et $R_2$ représentent des groupes éthyle ou n-propyle et
$R_3$ représente un groupe méthyle, éthyle ou n-propyle,

étant spécifié que le mélange contient au moins un colorant composant de formule ci-dessus dans laquelle $R_3$ représente un groupe n-propyle.

2. Mélanges selon la revendication 1, caractérisés en ce qu'ils consistent en les deux colorants de formules

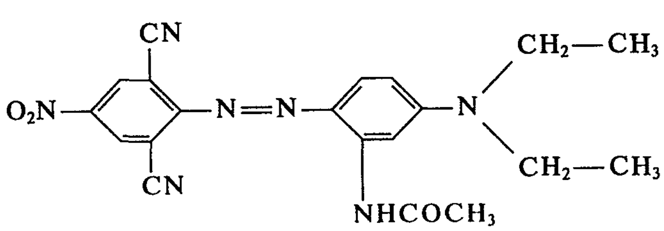

(A)

et

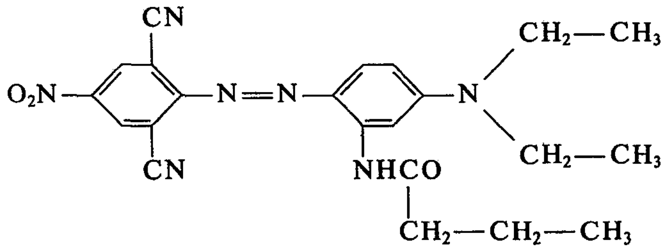

(B)

3. Mélanges selon la revendication 1 ou 2, caractérisés en ce que la proportion en poids du colorant de formule ci-dessus dans laquelle $R_1/R_2$ = éthyle et $R_3$ = n-propyle est de 30 à 80%.

4. Mélanges selon la revendication 1 ou 2, caractérisés en ce que la proportion en poids du colorant de formule ci-dessus dans laquelle $R_1/R_2$ = éthyle et $R_3$ = n-propyle est de 50 à 90%.

5. Mélanges selon la revendication 1 ou 2, caractérisés en ce que la proportion en poids du colorant de formule ci-dessus dans laquelle $R_1/R_2$ = éthyle et $R_3$ = n-propyle est de 70 à 90%.

6. Utilisation des mélanges selon les revendications 1 à 5 pour la teinture des fibres de polyester ou d'esters cellulosiques ou de mélanges de ces fibres avec de la laine et/ou des fibres cellulosiques.